# EUROPÄISCHE PATENTSCHRIFT

(11) **EP 2 400 274 B1**
(45) Veröffentlichungstag und Bekanntmachung des Hinweises auf die Patenterteilung: **18.10.2017**
(21) Anmeldenummer: 11168868.5
(22) Anmeldetag: 07.06.2011
(51) Int. Cl.: G01F 1/28, G01F 15/14, G05D 7/01

(54) **Fluidstrommesseinrichtung, Ventileinrichtung und Messverfahren**
Fluid flow measuring device, valve device and measuring method
Dispositif de mesure de flux de liquide, dispositif de ventilation et procédé de mesure

(30) Priorität: 23.06.2010 DE 102010024690
(43) Veröffentlichungstag der Anmeldung: 28.12.2011
(73) Patentinhaber: MAHLE International GmbH, 70376 Stuttgart (DE)
(72) Erfinder: Krämer, Moritz, 70378 Stuttgart (DE); Sauter, Hartmut, 71272 Renningen (DE); Schönekess, Holger Christian, 38120 Braunschweig (DE); Sohla, Hartmut, 71717 Beilstein (DE)
(74) Vertreter: BRP Renaud & Partner mbB Rechtsanwälte Patentanwälte Steuerberater

(56) Entgegenhaltungen:
- EP-A1- 1 475 580
- DE-A1- 4 220 440
- DE-A1-102007 061 560
- GB-A- 2 189 032
- US-A- 3 939 868

## Beschreibung

Die vorliegende Erfindung betrifft eine Fluidstrommesseinrichtung zum Messen eines Volumen- und/oder Massenstroms einer Fluidströmung, insbesondere einer Abgasrückführung einer Brennkraftmaschine, mit den Merkmalen des Oberbegriffs des Anspruchs 1. Die Erfindung betrifft außerdem eine Ventileinrichtung mit mindestens einem Ventilglied zum Steuern wenigstens einer von einer Fluidströmung durchströmbaren Durchtrittsöffnung und mit einer derartigen Fluidstrommesseinrichtung, insbesondere bei einer Abgasrückführung einer Brennkraftmaschine.

In vielen Bereichen der Technik ist es erforderlich, eine Fluidströmung, also insbesondere eine Gasströmung oder eine Flüssigkeitsströmung, hinsichtlich ihres Volumenstroms (Volumen pro Zeit) bzw. hinsichtlich ihres Massenstroms (Masse pro Zeit) zu kennen, beispielsweise um für einen ordnungsgemäßen Betrieb einer mit einer solchen Fluidströmung arbeitenden Einrichtung die Fluidströmung hinsichtlich ihres Volumenstroms bzw. ihres Massenstroms steuern bzw. regeln zu können oder um vom Volumen- und/oder Massenstrom der Fluidströmung abhängige Parameter der Einrichtung einstellen zu können.

Beispielsweise ist es bei einer Brennkraftmaschine, die mit einer Abgasrückführung ausgestattet ist, erforderlich, die rückgeführte Abgasmenge zu kennen, beispielsweise um ein die Rückführmenge steuerndes Abgasrückführventil kontrollieren, also steuern und/oder regeln zu können. Die zu messende Fluidströmung ist dann der rückgeführte Abgasstrom bzw. die rückgeführte Abgasströmung. Entsprechendes gilt beispielsweise auch für eine Frischluftversorgung der Brennkraftmaschine.

Eine gattungsgemäße Fluidstrommesseinrichtung ist aus der DE 10 2007 061 560 A1 bekannt. Sie umfasst mindestens ein Federelement, das der Fluidströmung ausgesetzt ist, derart, dass es zumindest in einem ferromagnetischen und/oder elektrisch leitenden mobilen Bereich abhängig vom daran angreifenden Staudruck federelastisch verstellbar ist, und mindestens einen im Vergleich zum mobilen Bereich des Federelements stationär angeordneten Wirbelstromsensor, der ein mit einem mit der staudruckbedingten Verstellung des mobilen Bereichs variierenden Abstand zwischen Wirbelstromsensor und mobilem Bereich korreliertes Messsignal generiert. Dabei ist das jeweilige Federelement eine Blattfeder, die in einem stationären Bereich an einem Gehäuse befestigt ist und die im mobilen Bereich relativ zum Gehäuse verstellbar ist, wobei der Wirbelstromsensor am Gehäuse ortsfest angeordnet ist. Ferner ist zumindest ein Sensorträger vorgesehen, der einerseits am Gehäuse befestigt ist und andererseits den jeweiligen Wirbelstromsensor trägt. Bei der bekannten Messeinrichtung dient der Sensorträger als Rückschlagbegrenzung für die Blattfeder.

Aus der DE 42 20 440 A1 ist eine Mutter bekannt, die sich grundsätzlich dazu eignet, staudruckbedingte Verstellbewegungen einer Blattfeder zu begrenzen.

Die vorliegende Erfindung beschäftigt sich mit dem Problem, für die Fluidstrommessung, insbesondere für die Abgasstrommessung, einen Weg aufzuzeigen, der sich insbesondere durch eine schnelle Messwerterfassung und/oder durch eine kompakte Bauweise auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, ein ferromagnetisches und/oder elektrisch leitendes Messglied der zu messenden Fluidströmung so auszusetzen, dass es abhängig vom Staudruck der Fluidströmung entlang einer definierten Messstrecke verstellt wird, wobei diese Verstellbewegung mit Hilfe eines Wirbelstromsensors erfasst wird. Da die Verstellung des Messglieds entlang der Messstrecke somit mit dem Staudruck korreliert und da außerdem der Staudruck mit dem Volumen- und/oder Massenstrom der Fluidströmung korreliert, erlaubt das mit Hilfe des Wirbelstromsensors ermittelte Signal bei Kenntnis des insgesamt durchströmbaren Querschnitts einen Rückschluss auf den vorliegenden Volumen- und/oder Massenstrom. Der Wirbelstromsensor arbeitet sehr schnell, so dass die Ermittlung des Volumen- und/oder Massenstroms quasi in Echtzeit möglich ist.

Das ferromagnetische und/oder elektrisch leitende Messglied kann beispielsweise durch einen mobilen Bereich eines der Fluidströmung ausgesetzten Federelements gebildet sein, wobei das Federelement bezüglich der Fluidströmung so angeordnet ist, dass sich ihr mobiler Bereich abhängig vom daran angreifenden Staudruck federelastisch verstellt. Der jeweilige Wirbelstromsensor ist nun im Vergleich zum mobilen Bereich des Federelements stationär angeordnet, und zwar so, dass er ein Messsignal generieren kann, das mit einem Abstand zwischen Wirbelstromsensor und mobilem Bereich korreliert, wobei dieser Abstand mit der staudruckbedingten Verstellung des mobilen Bereichs variiert. Beispielsweise wird das Federelement in seinem ferromagnetischen mobilen Bereich durch den Staudruck auf den Wirbelstromsensor zu verstellt oder vom Wirbelstromsensor weg verstellt. Durch die Verstellbewegung des ferromagnetischen und/oder elektrisch leitenden mobilen Bereichs des Federelements relativ zum Wirbelstromsensor wird der magnetische Fluss im magnetischen Feld des Wirbelstromsensors verändert. Diese Veränderung wird vom Wirbelstromsensor über die Änderung seiner Impedanz detektiert und kann bei entsprechender Kalibrierung mit dem vom mobilen Bereich zurückgelegten Verstellweg korreliert werden.

Entsprechend einer vorteilhaften Ausführungsform kann eine Auswerteeinrichtung vorgesehen sein, die dem Abstand zwischen mobilem Bereich und Wirbelstromsensor einen von der Fluidströmung durchströmbaren Querschnitt zuordnet und die in Abhängigkeit des Messsignals ein mit dem Volumenstrom und/oder mit dem Massenstrom der Fluidströmung korreliertes Ausgabesignal generiert. Der Zusammenhang zwischen gemessenem Abstand und durchströmbarem Querschnitt kann in der Auswerteeinrichtung beispielsweise in Form einer Kennlinie hinterlegt sein, auf welche die Auswerteeinrichtung Zugriff hat. Ebenso ist es grundsätzlich möglich, in der Auswerteeinrichtung einen entsprechenden Algorithmus zu hinterlegen.

Um thermische Effekte berücksichtigen zu können, kann ferner zumindest ein Temperatursensor vorgesehen sein, mit dem die Temperatur der Fluidströmung gemessen werden kann. Durch eine entsprechende Kopplung des jeweiligen Temperatursensors mit der Auswerteeinrichtung kann diese bei der Berechnung des Volumen- und/oder Massenstroms die aktuelle Strömungstemperatur berücksichtigen. Der Temperatursensor kann gleichzeitig zur thermischen Kompensation des Wirbelstromsensors verwendet werden. Beispielsweise sind für verschiedene Temperaturen separate Kennlinien für die Korrelation zwischen Messsignal und Volumen- und/oder Massenstrom vorgesehen, die in einem entsprechenden Kennfeld hinterlegt sind, auf welches die Auswerteeinrichtung Zugriff hat. Ebenso ist es möglich, die Strömungstemperatur in einem entsprechenden Algorithmus zu berücksichtigen.

Zusätzlich oder alternativ kann auch eine Absolutdruckmessung vorgesehen sein, da über den Staudruck letztlich nur ein Differenzdruck ermittelt wird. Dementsprechend kann auch wenigstens ein Drucksensor vorgesehen sein, mit dessen Hilfe der Absolutdruck in der Fluidströmung stromauf oder stromab der Messeinrichtung gemessen werden kann. Der jeweilige Drucksensor steht auf geeignete Weise mit der Auswerteeinrichtung in Verbindung, die dann den Absolutdruck bei der Ermittlung des Volumen- und/oder Massenstroms auf geeignete Weise berücksichtigen kann.

Erfindungsgemäß ist das jeweilige Federelement eine Blattfeder, die in einem stationären Bereich an einem Gehäuse befestigt ist und die im mobilen Bereich relativ zum Gehäuse verstellbar ist, wobei der Wirbelstromsensor an diesem Gehäuse ortsfest angeordnet ist. Eine derartige Blattfeder zeichnet sich durch einen besonders einfachen Aufbau aus. Sie ist robust und arbeitet mit hoher Zuverlässigkeit. Alternativ ist es zumindest grundsätzlich möglich, das jeweilige Federelement als Schraubenfeder auszugestalten, die einenends am Gehäuse befestigt ist und anderenends den ferromagnetischen und/oder elektrisch leitenden mobilen Bereich aufweist.

Besonders vorteilhaft ist nun eine Weiterbildung, bei welcher das Gehäuse von der Fluidströmung durchströmbar ist und hierzu zumindest eine Durchtrittsöffnung aufweist. Zweckmäßig ist dabei die gesamte zu messende Fluidströmung durch das Gehäuse bzw. durch dessen Durchtrittsöffnung(en) geführt. Die Blattfeder ist nun dieser Durchtrittsöffnung zugeordnet, derart, dass die Blattfeder abhängig vom Staudruck der Fluidströmung den durchströmbaren Querschnitt der jeweiligen Durchtrittsöffnung verändert. Die jeweilige Durchtrittsöffnung repräsentiert dabei eine vorgegebene Geometrie. Da außerdem die Blattfeder eine vorgegebene Kinematik besitzt, lässt sich der durchströmbare Querschnitt abhängig von der Verstellbewegung der Blattfeder vergleichsweise genau bestimmen. Ein entsprechender Zusammenhang lässt sich beispielsweise in einem entsprechenden Algorithmus hinterlegen. Ebenso kann hierzu eine Kennlinie aufgenommen werden. Besonders zweckmäßig ist dabei eine Anordnung, bei welcher sich die Blattfeder abströmseitig an der jeweiligen Durchtrittsöffnung befindet, so dass sie mit zunehmendem Staudruck der Fluidströmung den durchströmbaren Querschnitt der jeweiligen Durchtrittsöffnung vergrößert.

Die jeweilige Blattfeder kann zweckmäßig aus einem ferromagnetischen Stahlblech bestehen, wodurch sie einen besonders einfachen Aufbau besitzt. Alternativ ist auch eine Bauform denkbar, bei welcher die jeweilige Blattfeder selbst nicht ferromagnetisch ist, beispielsweise aus einem, insbesondere faserverstärkten, Kunststoff besteht und im mobilen Bereich ein ferromagnetisches und/oder elektrisch leitendes Element aufweist, zum Beispiel ein Blechteil. Das ferromagnetische Element kann dabei in den Körper des Federelements eingebettet sein oder auf geeignete Weise daran befestigt sein.

Bei der Erfindung ist außerdem zumindest ein Sensorträger vorgesehen, der einerseits am Gehäuse befestigt ist und andererseits den jeweiligen Wirbelstromsensor trägt. Auf diese Weise kann die Anbringung und Positionierung des jeweiligen Wirbelstromsensors erheblich vereinfacht werden. Insbesondere kann vorgesehen sein, den Sensorträger für den jeweiligen Wirbelstromsensor mit einer zur Blattfeder offenen Aufnahmeöffnung auszustatten, in welche der Wirbelstromsensor eingesetzt werden kann. Somit stellt der Sensorträger selbst kein Hindernis für die Ausbreitung des elektromagnetischen Felds des jeweiligen Wirbelstromsensors dar. Erfindungsgemäß ist der Sensorträger als Anschlag für die Blattfeder ausgestaltet und angeordnet, um deren Verstellbewegung zu begrenzen. Für verschiedene Anwendungen kann es erforderlich sein, den Verstellweg des Federelements zu begrenzen, beispielsweise um eine Beschädigung des Federelements zu vermeiden. Die Positionierung des Anschlags ist dabei so zu wählen, dass dabei auch das Ende des Messbereichs erreicht wird, da sich dann die mit Hilfe des Wirbelstromsensors erfassbaren Messwerte auch bei weiter zunehmendem Volumen- und/oder Massenstrom nicht mehr ändern.

Zweckmäßig ist eine Ausführungsform, bei der die jeweilige Blattfeder zumindest zwei parallel durchströmbare Durchtrittsöffnungen des Gehäuses steuert. Zusätzlich oder alternativ können zumindest zwei als Blattfedern ausgestaltete Blattfederelemente vorgesehen sein, die jeweils zumindest eine Durchtrittsöffnung des Gehäuses steuern. Somit sind insbesondere auch Ausführungsformen denkbar, bei denen zwei Blattfedern jeweils zwei Durchtrittsöffnungen steuern.

Zusätzlich oder alternativ können am jeweiligen Sensorträger zumindest zwei Wirbelstromsensoren angeordnet sein, die derselben Blattfeder zugeordnet sind. Hierdurch können beispielsweise sich unterschiedlich verstellende Bereiche des Federelements separat erfasst werden, um die Messwerte zu verbessern.

Das Gehäuse kann bei einer bevorzugten Ausführungsform parallel zur Hauptströmungsrichtung der Fluidströmung einen sich verjüngenden Querschnitt aufweisen. Hierdurch unterstützt die Geometrie des Gehäuses die Staudruckbildung.

Zusätzlich oder alternativ kann das Gehäuse zumindest eine gegenüber der Hauptströmungsrichtung der Fluidströmung geneigte Wand aufweisen, die zumindest eine solche Durchtrittsöffnung enthält. Zweckmäßig kann jedoch das Gehäuse zwei einander gegenüberliegende, jeweils gegenüber der Hauptströmungsrichtung der Fluidströmung geneigte Wände aufweisen, die jeweils zumindest eine solche Durchtrittsöffnung enthalten. Darüber hinaus kann das Gehäuse zwei einander gegenüberliegende, jeweils weitgehend parallel zur Hauptströmungsrichtung der Fluidströmung verlaufende Wände aufweisen. Insgesamt ist das Gehäuse zweckmäßig symmetrisch, insbesondere spiegelsymmetrisch, und zwar insbesondere in zwei senkrecht zueinander stehenden Symmetrieebenen, aufgebaut.

Besonders vorteilhaft ist eine Ausführungsform, bei der das jeweilige Federelement durch ein Ventilglied einer Ventileinrichtung gebildet ist, wobei dieses Ventilglied abhängig vom Staudruck einen von der Fluidströmung durchströmbaren Querschnitt der Ventileinrichtung steuert. Mit anderen Worten, bei dieser Ausführungsform ist die Fluidstrommesseinrichtung in eine Ventileinrichtung integriert, derart, dass das Ventilglied der Ventileinrichtung das Federelement der Messeinrichtung bildet. Hierdurch lässt sich die Messeinrichtung besonders kompakt in eine die Fluidströmung führende Leitung integrieren, sofern in besagter Leitung ohnehin eine solche Ventileinrichtung angeordnet ist.

Insbesondere kann es sich bei der Ventileinrichtung um ein Rückschlagsperrventil handeln, das in der einen Richtung eine Fluidströmung zulässt, während es in der Gegenrichtung die Fluidströmung sperrt. Beispielsweise kann die Ventileinrichtung, insbesondere in Form eines Rückschlagsperrventils, in einer externen Abgasrückführleitung einer Brennkraftmaschine angeordnet sein.

Der jeweilige Wirbelstromsensor kann durch eine elektrische Spule gebildet sein und dementsprechend einen ferritischen Spulenkern, eine Spulenwicklung und elektrische Anschlüsse aufweisen. Im Betrieb kann er mit einem Konstantstrom beaufschlagt sein, um in der Ruhelage ein elektromagnetisches Feld zu generieren. Eine Feldänderung verändert die Impedanz des Wirbelstromsensors und ist dementsprechend an den Anschlüssen messbar.

Besonders zweckmäßig ist es dabei, wenn Spulenkern und Spulenwicklung zumindest an einer vom mobilen Bereich des Federelements abgewandten Seite in z.B. einem nicht-ferromagnetischen Topfgehäuse angeordnet sind, das beispielsweise aus Aluminium oder aus Kunststoff bestehen kann. Hierdurch wird für den Wirbelstromsensor eine einfach handhabbare und somit einfach montierbare Einheit geschaffen.

Wie bereits weiter oben erläutert, kann das Federelement aus einem ferromagnetischen und/oder elektrisch leitenden Material, zum Beispiel aus Stahlblech bestehen oder alternativ in seinen mobilen Bereich ein aus einem ferromagnetischen und/oder elektrisch leitenden Material bestehendes Element aufweisen.

Optional kann außerdem zumindest ein Temperatursensor vorgesehen sein, mit dem die aktuelle Temperatur der Fluidströmung gemessen werden kann. Dabei kann insbesondere vorgesehen sein, dass der Temperatursensor in den Wirbelstromsensor integriert ist. Beispielsweise kann vorgesehen sein, dass der Temperatursensor mittels einer elektrischen Spule oder mittels einer Spulenwicklung gebildet ist. Insbesondere kann dann vorgesehen sein, dass der Wirbelstromsensor und der Temperatursensor mittels derselben elektrischen Spule gebildet sind, die zwei separate Spulenwicklungen aufweist, von denen die eine dem Temperatursensor zugeordnet ist, während die andere dem Wirbelstromsensor zugeordnet ist. Alternativ können der Wirbelstromsensor und der Temperatursensor mittels derselben Spulenwicklung gebildet sein, wobei die Temperaturmessung mittels Gleichspannung erfolgt, während die Wirbelstrommessung mittels Wechselspannung erfolgt.

Des weiteren kann optional ein Drucksensor vorgesehen sein, mit dem eine Absolutdruckmessung durchführbar ist. Dieser Drucksensor kann hierzu stromauf oder stromab des mobilen Bereichs angeordnet sein. Zusätzlich oder alternativ können zwei Drucksensoren vorgesehen sein, mit denen eine Differenzdruckmessung durchführbar ist. Hierbei ist dann der eine Drucksensor stromauf des mobilen Bereichs angeordnet, während der andere Drucksensor stromab des mobilen Bereichs angeordnet ist.

Die vorliegende Erfindung betrifft außerdem eine Ventileinrichtung, die wenigstens ein Ventilglied zum Steuern wenigstens einer von einer Fluidströmung durchströmbaren Durchtrittsöffnung aufweist und die mit einer erfindungsgemäßen Fluidstrommesseinrichtung ausgestattet ist. Dabei bildet das jeweilige Ventilglied der Ventileinrichtung das jeweilige Messglied bzw. Federelement der Fluidstrommesseinrichtung. Insbesondere kann die Ventileinrichtung als Rückschlagsperrventil ausgestaltet sein und/oder zur Anordnung in einer externen Abgasrückführleitung einer Brennkraftmaschine, insbesondere eines Kraftfahrzeugs, ausgestaltet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine teilweise geschnittene Seitenansicht einer Ventileinrichtung mit Fluidstrommesseinrichtung,
- Fig. 2: eine Seitenansicht der Ventileinrichtung entsprechend einer Blickrichtung II in Fig. 1,
- Fig. 3: eine teilweise geschnittene Seitenansicht der Ventileinrichtung entsprechend einer Blickrichtung III in Fig. 1,
- Fig. 4: eine teilweise geschnittene Draufsicht der Ventileinrichtung entsprechend einer Blickrichtung IV in Fig. 1.

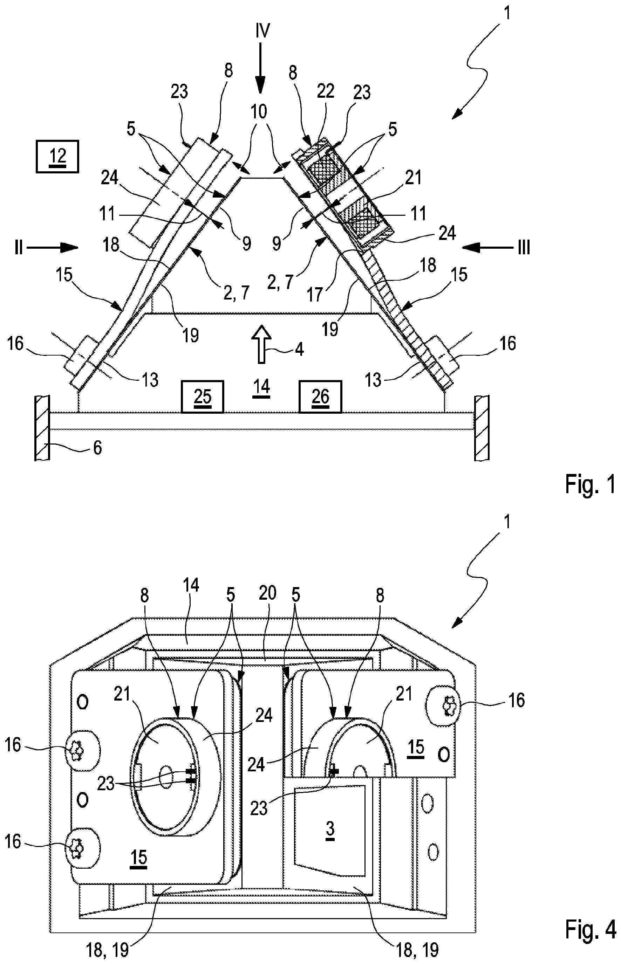

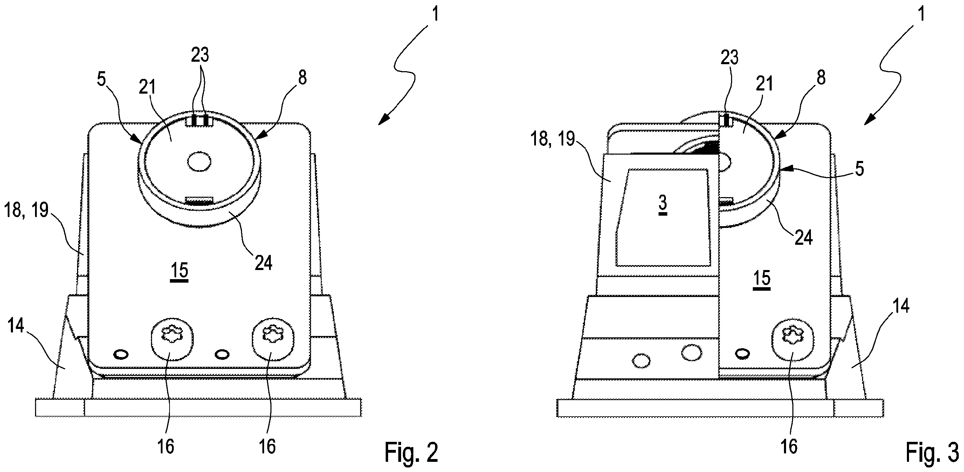

Entsprechend den Fig. 1-4 umfasst eine Ventileinrichtung 1 zumindest ein Ventilglied 2 jeweils zum Steuern wenigstens einer Durchtrittsöffnung 3, die von einer durch einen Pfeil angedeuteten Fluidströmung 4 durchströmbar ist. Ferner umfasst die Ventileinrichtung 1 eine Fluidstrommesseinrichtung 5, mit deren Hilfe der Volumen- und/oder Massenstrom der Fluidströmung 4 gemessen werden kann. Zweckmäßig ist dabei die Ventileinrichtung 1 als Rückschlagsperrventil ausgestaltet, das die Fluidströmung 4 in der einen Strömungsrichtung ermöglicht und in der Gegenrichtung sperrt. Besonders vorteilhaft ist dabei eine Ausführungsform, bei welcher die Ventileinrichtung 1 zur Anordnung in einer externen Abgasrückführleitung 6 einer Brennkraftmaschine, insbesondere eines Kraftfahrzeugs, ausgestaltet ist, die in Fig. 1 vereinfacht angedeutet ist.

Im gezeigten Beispiel umfasst die Ventileinrichtung 1 zwei Ventilglieder 2, die jeweils zwei Durchtrittsöffnungen 3 steuern. Diese Ausführungsform ist dabei rein exemplarisch und ohne Beschränkung der Allgemeinheit.

Die Fluidstrommesseinrichtung 5, die im Folgenden auch kurz als Messeinrichtung 5 bezeichnet werden kann, umfasst zumindest ein Federelement 7 und zumindest einen Wirbelstromsensor 8. Im gezeigten, bevorzugten Beispiel sind zwei Federelemente 7 und zwei Wirbelstromsensoren 8 gezeigt. Auch dies ist nur exemplarisch und ohne Beschränkung der Allgemeinheit.

Bei der hier gezeigten Integration der Messeinrichtung 5 in die Ventileinrichtung 1, ist das jeweilige Federelement 7 durch das jeweilige Ventilglied 2 gebildet. Mit anderen Worten, das jeweilige Ventilglied 2 dient bei der Messeinrichtung 5 als Federelement 7. Umgekehrt dient das jeweilige Federelement 7 bei der Ventileinrichtung 1 als Ventilglied 2.

Das jeweilige Federelement 7 ist der Fluidströmung 4 ausgesetzt, und zwar derart, dass das Federelement 7 zumindest in einem mobilen Bereich 9 abhängig vom daran angreifenden Staudruck federelastisch verstellbar ist. Die Verstellbarkeit des mobilen Bereichs 9 ist in Fig. 1 jeweils durch einen Doppelpfeil 10 angedeutet.

Das Federelement 7 ist zumindest in seinem mobilen Bereich 9 ferromagnetisch und/oder elektrisch leitend ausgestaltet. Der jeweilige Wirbelstromsensor 8 ist nun im Vergleich zum mobilen Bereich 9 des jeweiligen Federelements 7 stationär angeordnet, derart, dass er ein Messsignal generieren kann, das mit einem Abstand 11, der zwischen Wirbelstromsensor 8 und mobilem Bereich 9 vorliegt und der mit der staudruckbedingten Verstellung des mobilen Bereichs 9 variiert, korreliert. Mit anderen Worten, abhängig vom Staudruck der Fluidströmung 4 wird das jeweilige Federelement 7 zumindest in seinem mobilen Bereich 9 mehr oder weniger verstellt, wodurch der jeweilige Abstand 11 verändert wird. Diese Abstandsänderung kann nun mit Hilfe des jeweiligen Wirbelstromsensors 8 detektiert werden.

Die Messeinrichtung 5 umfasst außerdem eine Auswerteeinrichtung 12, die auf geeignete Weise mit dem jeweiligen Wirbelstromsensor 5 gekoppelt ist. Die Auswerteeinrichtung 12 kann nun dem Abstand 11 zwischen mobilem Bereich 9 und Wirbelstromsensor 8 einen von der Fluidströmung 4 durchströmbaren Querschnitt zuordnen und in Abhängigkeit des Messsignals ein mit dem Volumenstrom und/oder mit dem Massenstrom der Fluidströmung korreliertes Ausgabesignal generieren. Beim jeweiligen Federelement 7 handelt es sich um eine Blattfeder, die im Folgenden ebenfalls mit 7 bezeichnet wird. Die jeweilige Blattfeder 7 ist in einem stationären Bereich 13 an einem Gehäuse 14 befestigt und in ihrem jeweiligen mobilen Bereich 9 relativ zum Gehäuse 14 verstellbar. Der jeweilige Wirbelstromsensor 8 ist nun bezüglich des Gehäuses 14 ortsfest angeordnet. Das Gehäuse 14 ist von der Fluidströmung 4 durchströmbar und weist hierzu zumindest eine Durchtrittsöffnung 3 auf. Hierbei handelt es sich zweckmäßig um die jeweilige Durchtrittsöffnung 3 der Ventileinrichtung 1. Die Blattfeder 7 ist nun der jeweiligen Durchtrittsöffnung 3 zugeordnet, derart, dass die Blattfeder 7 abhängig vom Staudruck der Fluidströmung 4 den durchströmbaren Querschnitt der jeweiligen Durchtrittsöffnung 3 verändert. Im Beispiel ist die jeweilige Blattfeder 7 abströmseitig an der jeweiligen Durchtrittsöffnung 3 angeordnet, so dass die jeweilige Blattfeder 7 mit zunehmendem Staudruck den durchströmbaren Querschnitt des Gehäuses 14 vergrößert. Dies entspricht im Wesentlichen der Ventilfunktion des Ventilglieds 2 der Ventileinrichtung 1. Im Beispiel sind somit der jeweiligen Blattfeder 7 zumindest zwei parallel durchströmbare Durchtrittsöffnungen 3 zugeordnet. Ferner sind hier zwei Blattfedern 7 vorgesehen, die jeweils zumindest einer Durchtrittsöffnung 3, zugeordnet sind. Im Beispiel sind zwei Blattfedern 7 vorgesehen, die jeweils zwei Durchtrittsöffnungen 3 zugeordnet sind. Zweckmäßig ist die jeweilige Blattfeder 7 aus einem ferromagnetischen und/oder elektrisch leitendem Stahlblech hergestellt, wodurch ihr mobiler Bereich 9 automatisch ferromagnetisch und/oder elektrisch leitend ist.

Die Ventileinrichtung 1 ist hier als Rückschlagsperrventil ausgestaltet, das aufgrund des durch die Blattfeder 7 gebildeten Ventilglieds 2 auch als "Flatterventil" bezeichnet werden kann.

Am Gehäuse 14 ist zumindest ein Sensorträger 15 befestigt, der jeweils zumindest einen Wirbelstromsensor 8 trägt. Der jeweilige Sensorträger 15, ist beispielsweise mit dem Gehäuse 14 verschraubt. Eine entsprechende Verschraubung ist dabei mit 16 bezeichnet. Zweckmäßig kann in diese Verschraubung 16 die Blattfeder 7 integriert sein, um die jeweilige Blattfeder 7 zwischen dem Gehäuse 14 und dem Sensorträger 15 zu verspannen.

Der jeweilige Sensorträger 15 kann für den jeweiligen Wirbelstromsensor 8 eine Aufnahmeöffnung 17 aufweisen, die zur zugehörigen Blattfeder 7 offen ist und in die der jeweilige Wirbelstromsensor 8 einsetzbar ist. Ferner kann der jeweilige Sensorträger 15 zweckmäßig so angeordnet und so ausgestaltet sein, dass er die Verstellbewegung 10 der Blattfeder 7 begrenzt. Hierdurch bildet der jeweilige Sensorträger 15 einen Anschlag für die jeweilige Blattfeder 7. Der Anschlag begrenzt dabei eine Öffnungsbewegung der jeweiligen Blattfeder 7 aufgrund eines zunehmenden Staudrucks. In der Gegenrichtung bildet eine Außenseite 18 des Gehäuses 14 einen Anschlag für die Blattfeder 7 für eine Schließrichtung bei abnehmendem Staudruck. Insbesondere kommt die Blattfeder 7 an der Außenseite 18 des Gehäuses 14 zum Verschließen der jeweiligen Durchtrittsöffnungen 3 zur Anlage, wenn der durch die Fluidströmung 4 erzeugte Staudruck zu gering ist.

Bei der hier gezeigten Ausführungsform ist je Blattfeder 7 genau ein Wirbelstromsensor 8 vorgesehen. Bei einer anderen Ausführungsform können je Blattfeder 7 auch zwei oder mehr Wirbelstromsensoren 8 vorgesehen sein. Auf diese Weise kann die elastische Verformung der Blattfeder 7 beim Öffnungsvorgang besser erfasst werden.

Das Gehäuse 14 kann parallel zu einer durch den Strömungspfeil 4 angedeuteten Hauptströmungsrichtung der Fluidströmung 4 einen sich verjüngenden Querschnitt aufweisen. Ferner kann das Gehäuse 14 zumindest eine gegenüber der Hauptströmungsrichtung der Fluidströmung 4 geneigte Wand 19 aufweisen, welche die wenigstens eine Durchtrittsöffnung 3 enthält. Im Beispiel sind zwei derartige gegenüber der Hauptströmungsrichtung der Fluidströmung 4 geneigte Wände 19 vorgesehen, die einander gegenüberliegend angeordnet sind und die jeweils zwei Durchtrittsöffnungen enthalten. Die beiden geneigten Wände 19 sind über zwei weitere, einander gegenüberliegende Wände 20 miteinander verbunden, die sich jeweils im Wesentlichen parallel zur Hauptströmungsrichtung der Fluidströmung 4 erstrecken oder zumindest eine deutlich geringere Neigung gegenüber der Hauptströmungsrichtung der Fluidströmung 4 aufweisen als die geneigten Wände 19. Rein exemplarisch sind hier die geneigten Wände 19 etwa um 45° gegenüber der Hauptströmungsrichtung der Fluidströmung 4 geneigt.

Der jeweilige Wirbelstromsensor 8 umfasst beispielsweise einen ferritischen Spulenkern 21, eine Spulenwicklung 22 und zumindest zwei elektrische Anschlüsse 23. Im Beispiel ist außerdem ein Topfgehäuse 24 vorgesehen, das nichtferromagnetisch ist, zum Beispiel aus Aluminium oder Kunststoff besteht. Im Topfgehäuse 24 sind der Spulenkern 21 und die Spulenwicklung 22 untergebracht. Das Topfgehäuse 24 ist im gezeigten Beispiel axial beidseitig offen. Zweckmäßig ist jedoch eine Ausführungsform, bei welcher das Topfgehäuse 24 zumindest an einer der jeweiligen Blattfeder 7 abgewandten Seite verschlossen ist. Insbesondere kann das Topfgehäuse 24 axial beidseitig verschlossen sein, um eine hermetische Kapselung für den Wirbelstromsensor 8 zu erreichen. Das Federelement 7 kann insgesamt aus einem ferromagnetischen Material, zum Beispiel aus Stahlblech, bestehen, was die Realisierung des ferromagnetischen und/oder elektrisch leitenden mobilen Bereichs 9 vereinfacht. Grundsätzlich ist jedoch auch eine Ausführungsform denkbar, bei welcher das Federelement 7 in seinem mobilen Bereich 9 ein aus einem ferromagnetischen und/oder elektrisch leitenden Material bestehendes Element aufweist. Im Übrigen kann das Federelement 7 dann aus einem nicht-ferromagnetischen Material hergestellt sein, beispielsweise aus einem Kunststoff, der insbesondere faserverstärkt sein kann. Mit Hilfe der hier vorgestellten Messeinrichtung 5 kann der Volumenstrom und/oder der Massenstrom der Fluidströmung 4 wie folgt ermittelt werden:
Das jeweilige Federelement 7 ist zumindest mit seinem ferromagnetischen mobilen Bereich 9 dem Staudruck der Fluidströmung 4 ausgesetzt, und zwar gezielt so, dass sich das jeweilige Federelement 7 zumindest in seinem mobilen Bereich 9 abhängig von diesem Staudruck federelastisch verstellt. Der jeweilige Wirbelstromsensor 8 kann nun die Verstellbewegung bzw. die Positionsänderung des mobilen Bereichs 9 des jeweiligen Federelements 7 erfassen und ein damit korreliertes Messsignal erzeugen. Die Auswerteeinrichtung 12 kann nun dieses Messsignal unter Berücksichtigung der Federkennlinie des jeweiligen Federelements 7 und der Geometrie der insgesamt durchströmbaren Querschnitte den Volumenstrom und/oder den Massenstrom der Fluidströmung 4 ermitteln.

Der Zusammenhang zwischen dem Messsignal des Wirbelstromsensors 8 und dem jeweiligen Volumenstrom und/oder dem jeweiligen Massenstrom kann beispielsweise mittels eines Kalibrierverfahrens ermittelt werden, bei dem bekannte Volumen- und/oder Massenströme erzeugt und die dabei mit Hilfe des Wirbelstromsensors 8 ermittelten Messsignale zugeordnet werden.

Die Auswerteeinrichtung 12 kann zur Berücksichtigung der aktuellen Fluidtemperatur mit wenigstens einem Temperatursensor 25 gekoppelt sein, der die aktuelle Temperatur der Fluidströmung 4 misst. Zusätzlich oder alternativ kann die Auswerteeinrichtung 12 mit wenigstens einem Drucksensor 26 gekoppelt sein, der den aktuellen Absolutdruck in der Fluidströmung 4 erfasst. Im Beispiel ist der Drucksensor 26 stromauf der Messeinrichtung 5 angeordnet. Grundsätzlich kann er auch stromab davon angeordnet sein. Zweckmäßig ist der jeweilige Sensor 25, 26 am Gehäuse 14 angeordnet.

Ebenso können zur Differenzdruckmessung zwei derartige Drucksensoren 26 vorgesehen sein, nämlich ein stromauf der Messeinrichtung 5 angeordneter erster Drucksensor 26 und ein stromab der Messeinrichtung 5 angeordneter zweiter Drucksensor 26. Mit Hilfe der Differenzdruckmessung über der Messeinrichtung 5 kann die Messgenauigkeit für den Volumenstrom erheblich verbessert werden. Auch in diesem Fall sind die beiden Drucksensoren zweckmäßig am Gehäuse 14 angeordnet.

Anstelle des hier gezeigten separaten Temperatursensors 25 kann gemäß einer anderen vorteilhaften Ausführungsform vorgesehen sein, den Temperatursensor 25 in einen der Wirbelstromsensoren 8 zu integrieren. Bekanntermaßen ändert sich der elektrische Widerstand des Spulenwicklung 22 proportional zu Temperatur. Durch eine Messung des elektrischen Widerstands der jeweiligen Spulenwicklung 22 kann also die Auswerteeinrichtung 12 die aktuelle Temperatur des Fluids ermitteln. Beispielsweise lässt sich die Widerstandsmessung mittels einer Gleichspannung durchführen, der hierzu an die Spulenwicklung 22 angelegt wird. Im Unterschied dazu erfolgt die Impedanzmessung bzw. die Wegmessung mittels einer an die Spulenwicklung 22 angelegten Wechselspannung. Durch eine entsprechende Spannungskombination lässt sich somit über die selbe Spulenwicklung sowohl die aktuelle Temperatur als auch der aktuelle Abstand ermitteln. Alternativ können auch zwei separate Spulen vorgesehen sein, nämlich einerseits eine erste Spule zur Realisierung der Temperaturmessung und andererseits eine zweite Spule zur Realisierung der Abstandsmessung. Ebenso ist es alternativ möglich, innerhalb derselben Spule zwei separate Spulenwicklungen 22 vorzusehen, nämlich einerseits eine erste Spulenwicklung zur Realisierung der Temperaturmessung und andererseits eine zweite Spulenwicklung zur Realisierung der Abstandsmessung.

## Patentansprüche

1. Fluidstrommesseinrichtung zum Messen eines Volumen- und/oder Massenstroms einer Fluidströmung (4), insbesondere einer Abgasrückführung einer Brennkraftmaschine,
- mit mindestens einem Federelement (7), das der Fluidströmung (4) ausgesetzt ist, derart, dass es zumindest in einem ferromagnetischen und/oder elektrisch leitenden mobilen Bereich (9) abhängig vom daran angreifenden Staudruck federelastisch verstellbar ist,
- mit mindestens einem im Vergleich zum mobilen Bereich (9) des Federelements (7) stationär angeordneten Wirbelstromsensor (8), der ein mit einem mit der staudruckbedingten Verstellung (10) des mobilen Bereichs (9) variierenden Abstand (11) zwischen Wirbelstromsensor (8) und mobilem Bereich (9) korreliertes Messsignal generiert,
- wobei das jeweilige Federelement eine Blattfeder (7) ist, die in einem stationären Bereich (13) an einem Gehäuse (14) befestigt ist und die im mobilen Bereich (9) relativ zum Gehäuse (14) verstellbar ist, wobei der Wirbelstromsensor (8) am Gehäuse (14) ortsfest angeordnet ist,
- wobei zumindest ein Sensorträger (15) vorgesehen ist, der einerseits am Gehäuse (14) befestigt ist und andererseits den jeweiligen Wirbelstromsensor (8) trägt,
**dadurch gekennzeichnet,**
**dass** der Sensorträger (15) als Anschlag für die Blattfeder (7) ausgestaltet und angeordnet ist, um deren staudruckbedingte Verstellbewegung (10) zu begrenzen.

2. Fluidstrommesseinrichtung nach Anspruch 1, **gekennzeichnet durch** eine Auswerteeinrichtung (12), die dem Abstand (11) zwischen mobilem Bereich (9) und Wirbelstromsensor (8) einen von der Fluidströmung (4) durchströmbaren Querschnitt zuordnet und in Abhängigkeit des Messsignals ein mit dem Volumenstrom und/oder mit dem Massenstrom der Fluidströmung (4) korreliertes Ausgabesignal generiert.

3. Fluidstrommesseinrichtung nach Anspruch 2,
**dadurch gekennzeichnet,**
**dass** zumindest ein Temperatursensor (25) zum Messen der aktuellen Temperatur der Fluidströmung (4) vorgesehen ist, wobei die Auswerteeinrichtung (12) mit dem wenigstens einen Temperatursensor (25) gekoppelt ist und die bei der Berechnung des Volumenstroms und/oder Massenstroms die aktuelle Temperatur der Fluidströmung (4) berücksichtigt.

4. Fluidstrommesseinrichtung nach einem der Ansprüche 1 bis 3,
**dadurch gekennzeichnet,**
**dass** die jeweilige Blattfeder (7) aus einem ferromagnetischen und/oder elektrisch leitenden Stahlblech besteht.

5. Fluidstrommesseinrichtung nach einem der Ansprüche 1 bis 4,
**dadurch gekennzeichnet,**
- **dass** das Gehäuse (14) von der Fluidströmung (4) durchströmbar ist und hierzu zumindest eine Durchtrittsöffnung (3) aufweist, wobei die Blattfeder (7) der Durchtrittsöffnung (3) zugeordnet ist, derart, dass die Blattfeder (7) abhängig vom Staudruck der Fluidströmung (4) den durchströmbaren Querschnitt der jeweiligen Durchtrittsöffnung (3) verändert,
- wobei insbesondere vorgesehen sein kann, dass die Blattfeder (7) abströmseitig an der jeweiligen Durchtrittsöffnung (3) so angeordnet ist, dass sie mit zunehmendem Staudruck der Fluidströmung (4) den durchströmbaren Querschnitt der jeweiligen Durchtrittsöffnung (3) vergrößert.

6. Fluidstrommesseinrichtung nach einem der Ansprüche 1 bis 5,
**gekennzeichnet durch**
dass der Sensorträger (15) für den jeweiligen Wirbelstromsensor (8) eine zur Blattfeder (7) offene Aufnahmeöffnung (17) aufweist, in die der Wirbelstromsensor (8) eingesetzt ist.

7. Fluidstrommesseinrichtung nach einem der Ansprüche 1 bis 6,
**dadurch gekennzeichnet,**
- **dass** die jeweilige Blattfeder (7) zumindest zwei parallel durchströmbaren Durchtrittsöffnungen (3) des Gehäuses (14) zugeordnet ist, und/oder
- **dass** zumindest zwei als Blattfedern (7) ausgestaltete Federelemente vorgesehen sind, die jeweils zumindest einer Durchtrittsöffnung (3) des Gehäuses (14) zugeordnet sind, und/oder
- **dass** am jeweiligen Sensorträger (15) zumindest zwei Wirbelstromsensoren (8) angeordnet sind, die derselben Blattfeder (7) zugeordnet sind, und/oder
- **dass** das Gehäuse (14) parallel zur Hauptströmungsrichtung der Fluidströmung (4) einen sich verjüngenden Querschnitt aufweist, und/oder
- **dass** das Gehäuse (14) zumindest eine gegenüber der Hauptströmungsrichtung der Fluidströmung (4) geneigte Wand (19) aufweist, die wenigstens eine solche Durchtrittsöffnung (3) enthält, und/oder
- **dass** das Gehäuse (14) zumindest zwei einander gegenüberliegende, jeweils gegenüber der Hauptströmungsrichtung der Fluidströmung (4) geneigte Wände (19) aufweist, die jeweils wenigstens eine solche Durchtrittsöffnung (3) enthalten,
- **dass** das Gehäuse (14) zwei einander gegenüberliegende Wände (20) aufweist, die jeweils im Wesentlichen parallel zur Hauptströmungsrichtung der Fluidströmung (4) verlaufen.

8. Fluidstrommesseinrichtung nach einem der Ansprüche 1 bis 7,
**dadurch gekennzeichnet,**
- **dass** das jeweilige Federelement (7) das Ventilglied (2) einer Ventileinrichtung (1) ist, das abhängig vom Staudruck einen von der Fluidströmung (4) durchströmbaren Querschnitt der Ventileinrichtung (1) steuert,
- wobei insbesondere vorgesehen sein kann, dass die Ventileinrichtung (1) als Rückschlagsperrventil ausgestaltet ist,
- wobei insbesondere vorgesehen sein kann, dass die Ventileinrichtung (1) zur Anordnung in einer externen Abgasrückführleitung (6), einer Brennkraftmaschine ausgestaltet ist.

9. Fluidstrommesseinrichtung nach einem der Ansprüche 1 bis 8,
**dadurch gekennzeichnet,**
- **dass** der jeweilige Wirbelstromsensor (8) einen ferritischen Spulenkern (21) eine Spulenwicklung (22) und elektrische Anschlüsse (23) aufweist,
- wobei insbesondere vorgesehen sein kann, dass der Spulenkern (21) und die Spulenwicklung (22) zumindest an einer vom mobilen Bereich (9) des Federelements (7) abgewandten Seite in einem nicht-ferromagnetischen Topfgehäuse (24), zum Beispiel aus Aluminium oder Kunststoff, angeordnet sind.

10. Fluidstrommesseinrichtung nach einem der Ansprüche 1 bis 9,
**dadurch gekennzeichnet,**
- **dass** das Federelement (7) aus einem ferromagnetischen und/oder elektrisch leitenden Material, zum Beispiel Stahlblech, besteht, oder
- **dass** das Federelement (7) in seinem mobilen Bereich (9) ein aus einem ferromagnetischen und/oder elektrisch leitenden Material bestehendes Element aufweist.

11. Fluidstrommesseinrichtung nach einem der Ansprüche 1 bis 10,
**dadurch gekennzeichnet,**
- **dass** der Temperatursensor (25) in den Wirbelstromsensor (8) integriert ist,
- wobei insbesondere vorgesehen sein kann, dass der Temperatursensor (25) mittels einer elektrischen Spule oder mittels einer Spulenwicklung gebildet ist,
- wobei insbesondere vorgesehen sein kann, dass der Wirbelstromsensor (8) und der Temperatursensor (25) mittels derselben elektrischen Spule gebildet sind, die zwei separate Spulenwicklungen aufweist, von denen die eine dem Temperatursensor zugeordnet ist, während die andere dem Wirbelstromsensor zugeordnet ist, oder dass der Wirbelstromsensor (8) und der Temperatursensor (25) mittels derselben Spulenwicklung gebildet sind, wobei die Temperaturmessung mittels Gleichspannung erfolgt, während die Wirbelstrommessung mittels Wechselspannung erfolgt.

12. Fluidstrommesseinrichtung nach einem der Ansprüche 1 bis 11
**dadurch gekennzeichnet,**
- **dass** ein Drucksensor (26) zur Absolutdruckmessung vorgesehen ist, der stromauf oder stromab des mobilen Bereichs (9) angeordnet ist, und/oder
- **dass** zwei Drucksensoren (26) zur Differenzdruckmessung vorgesehen sind, von denen der eine stromauf und der andere stromab des mobilen Bereichs (9) angeordnet ist.

13. Ventileinrichtung, insbesondere einer Abgasrückführung einer Brennkraftmaschine, mit mindestens einem Ventilglied (2) zum Steuern wenigstens einer von einer Fluidströmung (4) durchströmbaren Durchtrittsöffnung (3) und mit einer Fluidstrommesseinrichtung (5) nach einem der Ansprüche 1 bis 12, wobei das jeweilige Ventilglied (2) der Ventileinrichtung (1) das jeweilige Federelement (7) der Fluidstrommesseinrichtung (5) bildet.

14. Ventileinrichtung nach Anspruch 13,
**dadurch gekennzeichnet,**
- **dass** die Ventileinrichtung (1) als Rückschlagsperrventil ausgestaltet ist, und/oder
- **dass** die Ventileinrichtung (1) zur Anordnung in einer externen Abgasrückführleitung (6) einer Brennkraftmaschine, insbesondere eines Kraftfahrzeugs, ausgestaltet ist.

## Claims

1. A fluid flow measuring device for measuring a volume flow rate and/or mass flow rate of a fluid flow (4), in particular of an exhaust gas recirculation of an internal combustion engine,
- with at least one spring element (7) which is exposed to the fluid flow (4) in such a manner that the spring element is spring-elastically displaceable at least in a ferromagnetic and/or electrically conductive mobile region (9) depending on the dynamic pressure acting thereon,
- with an eddy current sensor (8) which, compared to the mobile region (9) of the spring element (7), is arranged stationarily and which generates a measurement signal that is correlated with a distance (11) between eddy current sensor (8) and mobile region (9), which distance varies with the dynamic pressure-related displacement (10) of the mobile region (9),
- wherein the respective spring element is a leaf spring (7) which, in a stationary region (13), is fastened to a housing (14) and which, in the mobile region (9), is displaceable relative to the housing (14), wherein the eddy current sensor (8) is arranged stationarily on the housing (14),
- wherein at least one sensor carrier (15) is provided which, on the one side, is fastened to the housing (14) and, on the other side, carries the respective eddy current sensor (8),
**characterized in**
**that** the sensor carrier (15) is configured as limit stop for the leaf spring (7) and is arranged so as to limit the displacement movement (10) of the same caused by the dynamic pressure.

2. The measuring device according to claim 1,
**characterized by** an evaluation device (12) which associates the distance (11) between mobile region (9) and eddy current sensor (8) with a cross-section through which the fluid flow (4) can flow and, depending on the measurement signal, generates an output signal which is correlated with the volume flow rate and/or the mass flow rate of the fluid flow (4).

3. The measuring device according to claim 2,
**characterized in**
**that** at least one temperature sensor (25) for measuring the actual temperature of the fluid flow (4) is provided, wherein the evaluation device (12) is coupled to at least one temperature sensor (25) and considers the actual temperature of the fluid flow (4) when calculating the volume flow rate and/or mass flow rate.

4. The measuring device according to any one of the claim 1 to 3,
**characterized in**
**that** the respective leaf spring (7) consists of a ferromagnetic and/or electrically conductive sheet steel.

5. The measurement device according to any one of the claims 1 to 4, **characterized in**
- **that** the fluid flow (4) can flow through the housing (14) which has at least one passage opening (3) for this purpose, wherein the leaf spring (7) is associated with said passage opening (3) in such a manner that depending on the dynamic pressure of the fluid flow (4), the leaf spring (7) changes the through-flowable cross-section of the respective passage opening (3),
- wherein it can in particular be provided that the leaf spring (7) is arranged on the outflow side at the respective passage opening (3) in such a manner that with increasing dynamic pressure of the fluid flow (4), said leaf spring increases the through-flowable cross-section of the respective passage opening (3).

6. The measuring device according to any one of the claims 1 to 5,
**characterized by**
that the sensor carrier (15) for the respective eddy current sensor (8) has a receiving opening (17) which is open toward the leaf spring (7) and in which the eddy current sensor (8) is inserted.

7. The measuring device according to any one of the claims 1 to 6,
**characterized in**
- **that** the respective leaf spring (7) is associated with at least two passage openings (3) of the housing (14) through which openings parallel flows can pass, and/or
- **that** at least two spring elements configured as leaf springs (7) are provided which are each associated with at least one passage opening (3) of the housing (14), and/or
- **that** on the respective sensor carrier (15), at least two eddy current sensors (8) are arranged which are associated with the same leaf spring (7), and/or
- **that** the housing (14) has a tapering cross-section which extends parallel to the main flow direction of the fluid flow (4), and/or
- **that** the housing (14) has at least one wall (19) which is inclined with respect to the main flow direction of the fluid flow (4) and contains at least one such passage opening (3), and/or
- **that** the housing (14) has at least two walls (19) which oppose each other and are inclined with respect to the main flow direction of the fluid flow (4) and which each contain at least one such passage opening (3),
- **that** the housing (14) has two walls (20) which oppose each other and extend substantially parallel to the main flow direction of the fluid flow (4).

8. The measuring device according to any one of the claims 1 to 7,
**characterized in**
- **that** the respective spring element (7) is the valve member (2) of a valve device (1) which, depending on the dynamic pressure, controls a cross-section of the valve device (1), through which cross-section the fluid flow (4) can pass,
- wherein it can in particular be provided that the valve device (1) is configured as check valve,
- wherein it can in particular be provided that the valve device (1) is configured to be arranged in an external exhaust gas return line (6) of an internal combustion engine.

9. The measuring device according to any one of the claims 1 to 8,
**characterized in**
- **that** the respective eddy current sensor (8) has a ferritic coil core (21), a coil winding (22) and electrical connections (23),
- wherein it can in particular be provided that the coil core (21) and the coil winding (22) are arranged at least on one side facing away from the mobile region (9) of the spring element (7) in a non-ferromagnetic barrel housing (24) which can be made of, for example, aluminum or plastic.

10. The measuring device according to any one of the claims 1 to 9,
**characterized in**
- **that** the spring element (7) consists of a ferromagnetic and/or electrically conductive material, for example sheet steel, or
- **that** the spring element (7) has an element in its mobile region (9), which element consists of a ferromagnetic and/or electrically conductive material.

11. The measuring device according to any one of the claims 1 to 10,
**characterized in**
- **that** the temperature sensor (25) is integrated in the eddy current sensor (8),
- wherein it can in particular be provided that the temperature sensor (25) is formed by means of an electrical coil or by means of a coil winding,
- wherein it can in particular be provided that the eddy current sensor (8) and the temperature sensor (25) are formed by means of the same electrical coil which has two separate coil windings, one of which is associated with the temperature sensor while the other one is associated with the eddy current sensor or that the eddy current sensor (8) and the temperature sensor (25) are formed by means of the same coil winding, wherein the temperature measurement takes place by means of direct current voltage whereas the eddy current measurement takes place by means of alternating current measurement.

12. The measuring device according to any one of the claims 1 to 11,
**characterized in**
- **that** for absolute pressure measurement, one pressure sensor (26) is provided which is arranged upstream or downstream of the mobile region (9), and/or
- **that** for differential pressure measurement, two pressure sensors (26) are provided, one of which is arranged upstream and the other one downstream of the mobile region (9).

13. A valve device, in particular of an exhaust gas recirculation of an internal combustion engine, with at least one valve member (2) for controlling at least one passage opening (3) through which a fluid flow (4) can flow and with a fluid flow measuring device (5) according to any one of the claims 1 to 12, wherein the respective valve member (2) of the valve device (1) forms the respective spring element (7) of the fluid flow measuring device (5).

14. The valve device according to claim 13,
**characterized in**
- **that** the valve device (1) is configured as check valve, and/or
- **that** the valve device (1) is configured to be arranged in an external exhaust gas return line (6) of an internal combustion engine, in particular of a motor vehicle.

## Revendications

1. Dispositif de mesure de flux de fluide servant à mesurer un flux volumique et/ou massique d'un écoulement de fluide (4), en particulier d'un système de recyclage de gaz d'échappement d'un moteur à combustion interne,
- avec au moins un élément de ressort (7), qui est exposé à l'écoulement de fluide (4) de telle manière qu'il peut être ajusté de manière élastique au moins dans une zone mobile (9) ferromagnétique et/ou électroconductrice en fonction de la pression dynamique appliquée sur celle-ci,
- avec au moins un capteur de courants de Foucault (8) disposé de manière stationnaire en comparaison avec la zone mobile (9) de l'élément de ressort (7), lequel capteur de courants de Foucault génère un signal de mesure corrélé avec une distance (11) variant avec l'ajustement (10), lié à la pression dynamique, de la zone mobile (9) entre le capteur de courants de Foucault (8) et la zone mobile (9),
- dans lequel l'élément de ressort respectif est un ressort à lames (7), qui est fixé dans une zone stationnaire (13) à un boîtier (14) et qui peut être ajusté dans la zone mobile (9) par rapport au boîtier (14), dans lequel le capteur de courants de Foucault (8) est disposé de manière fixe au niveau du boîtier (14),
- dans lequel au moins un support de capteur (15) est prévu, lequel est fixé d'une part au boîtier (14) et supporte d'autre part le capteur de courants de Foucault (8) respectif,
**caractérisé en ce**
**que** le support de capteur (15) est configuré sous la forme d'une butée pour le ressort à lames (7) et est disposé afin de limiter le déplacement d'ajustement (10), lié à la pression dynamique, de celui-ci.

2. Dispositif de mesure de flux de fluide selon la revendication 1,
**caractérisé par** un dispositif d'évaluation (12), qui associe une section transversale pouvant être traversée par l'écoulement de fluide (4) à la distance (11) entre la zone mobile (9) et le capteur de courants de Foucault (8) et génère, en fonction du signal de mesure, un signal de sortie corrélé avec le flux volumique et/ou avec le flux massique de l'écoulement de fluide (4).

3. Dispositif de mesure de flux de fluide selon la revendication 2,
**caractérisé en ce**
**qu'**au moins un capteur de température (25) est prévu afin de mesurer la température instantanée de l'écoulement de fluide (4), dans lequel le dispositif d'évaluation (12) est couplé à l'au moins un capteur de température (25) et tient compte, lors du calcul du flux volumique et/ou du flux massique, de la température instantanée de l'écoulement de fluide (4).

4. Dispositif de mesure de flux de fluide selon l'une quelconque des revendications 1 à 3,
**caractérisé en ce**
**que** le ressort à lames (7) respectif est constitué d'une tôle en acier ferromagnétique et/ou électroconductrice.

5. Dispositif de mesure de flux de fluide selon l'une quelconque des revendications 1 à 4,
**caractérisé en ce**
- **que** le boîtier (14) peut être traversé par l'écoulement de fluide (4) et présente à cet effet au moins une ouverture de passage (3), dans lequel le ressort à lames (7) est associé à l'ouverture de passage (3) de telle manière que le ressort à lames (7) modifie, en fonction de la pression dynamique de l'écoulement de fluide (4), la section transversale pouvant être traversée de l'ouverture de passage (3) respective,
- dans lequel il peut être prévu en particulier que le ressort à lames (7) soit disposé côté aval au niveau de l'ouverture de passage (3) respective de telle sorte qu'il agrandit avec une pression dynamique augmentant l'écoulement de fluide (4) la section transversale pouvant être traversée de l'ouverture de passage (3) respective.

6. Dispositif de mesure de flux de fluide selon l'une quelconque des revendications 1 à 5,
**caractérisé en ce**
**que** le support de capteur (15) pour le capteur de courants de Foucault (8) respectif présente une ouverture de logement (17) ouverte vers le ressort à lames (7), dans laquelle le capteur de courants de Foucault (8) est inséré.

7. Dispositif de mesure de flux de fluide selon l'une quelconque des revendications 1 à 6,
**caractérisé en ce**
- **que** le ressort à lames (7) respectif est associé à au moins deux ouvertures de passage (3), pouvant être traversées de manière parallèle, du boîtier (14), et/ou
- **qu'**au moins deux éléments de ressort configurés sous la forme de ressorts à lames (7) sont prévus, lesquels sont associés respectivement à une ouverture de passage (3) du boîtier (14), et/ou
- **qu'**au moins deux capteurs de courants de Foucault (8) sont disposés au niveau du support de capteur (15) respectif, lesquels sont associés au même ressort à lames (7), et/ou
- **que** le boîtier (14) présente, de manière parallèle par rapport à la direction d'écoulement principale de l'écoulement de fluide (4), une section transversale se rétrécissant, et/ou
- **que** le boîtier (14) présente au moins une paroi (19) inclinée par rapport à la direction d'écoulement principale de l'écoulement de fluide (4), laquelle contient au moins une ouverture de passage (3) de ce type, et/ou
- **que** le boîtier (14) présente au moins deux parois (19) se faisant face l'une l'autre, inclinées respectivement par rapport à la direction d'écoulement principale de l'écoulement de fluide (4), lesquelles contiennent respectivement au moins une ouverture de passage (3) de ce type,
- **que** le boîtier (14) présente deux parois (20) se faisant face l'une l'autre, lesquelles s'étendent respectivement sensiblement de manière parallèle par rapport à la direction d'écoulement principale de l'écoulement de fluide (4).

8. Dispositif de mesure de flux de fluide selon l'une quelconque des revendications 1 à 7,
**caractérisé en ce**
- **que** l'élément de ressort (7) respectif est l'organe de soupape (2) d'un dispositif de soupape (1), qui commande, en fonction de la pression dynamique, une section transversale, pouvant être traversée par l'écoulement de fluide (4), du dispositif de soupape (1),
- dans lequel il peut être prévu en particulier que le dispositif de soupape (1) soit configuré sous la forme d'une soupape de blocage anti-retour,
- dans lequel il peut être prévu en particulier que le dispositif de soupape (1) soit réalisé afin d'être disposé dans un conduit de recyclage de gaz d'échappement (6) externe d'un moteur à combustion interne.

9. Dispositif de mesure de flux de fluide selon l'une quelconque des revendications 1 à 8,
**caractérisé en ce**
- **que** le capteur de courants de Foucault (8) respectif présente une partie centrale de bobine (21) ferritique, un enroulement de bobine (22) et des raccordements (23) électriques,
- dans lequel il peut être prévu en particulier que la partie centrale de bobine (21) et l'enroulement de bobine (22) soient disposés au moins au niveau d'un côté opposé à la zone mobile (9) de l'élément de ressort (7) dans un boîtier en forme de pot (24) non ferromagnétique, par exemple en aluminium ou en matière plastique.

10. Dispositif de mesure de flux de fluide selon l'une quelconque des revendications 1 à 9,
**caractérisé en ce**
- **que** l'élément de ressort (7) est constitué d'un matériau ferromagnétique et/ou électroconducteur, par exemple d'une tôle d'acier, ou
- **que** l'élément de ressort (7) présente, dans sa zone mobile (9), un élément constitué d'un matériau ferromagnétique et/ou électroconducteur.

11. Dispositif de mesure de flux de fluide selon l'une quelconque des revendications 1 à 10,
**caractérisé en ce**
- **que** le capteur de température (25) est intégré dans le capteur de courants de Foucault (8),
- dans lequel il peut être prévu en particulier que le capteur de température (25) soit formé au moyen d'une bobine électrique ou au moyen d'un enroulement de bobine,
- dans lequel il peut être prévu en particulier que le capteur de courants de Foucault (8) et le capteur de température (25) soient formés au moyen de la même bobine électrique, qui présente deux enroulements de bobine séparés, dont l'un est associé au capteur de température, tandis que l'autre est associé au capteur de courants de Foucault, ou que le capteur de courants de Foucault (8) et le capteur de température (25) soient formés au moyen du même enroulement de bobine, dans lequel la mesure de température est effectuée au moyen d'une tension continue, tandis que la mesure de courants de Foucault est effectuée au moyen d'une tension alternative.

12. Dispositif de mesure de flux de fluide selon l'une quelconque des revendications 1 à 11,
**caractérisé en ce**
- **qu'**un capteur de pression (26) est prévu afin de mesurer la pression absolue, lequel est disposé en amont ou en aval de la zone mobile (9), et/ou
- **que** deux capteurs de pression (26) sont prévus afin de mesurer la pression différentielle, dont l'un est disposé en amont et l'autre en aval de la zone mobile (9).

13. Dispositif de soupape, en particulier d'un système de recyclage de gaz d'échappement, d'un moteur à combustion interne, avec au moins un organe de soupape (2) servant à commander au moins une ouverture de passage (3) pouvant être traversée par un écoulement de fluide (4) et avec un dispositif de mesure de flux de fluide (5) selon l'une quelconque des revendications 1 à 12, dans lequel l'organe de soupape (2) respectif du dispositif de soupape (1) forme l'élément de ressort (7) respectif du dispositif de mesure de flux de fluide (5).

14. Dispositif de soupape selon la revendication 13,
**caractérisé en ce**
- **que** le dispositif de soupape (1) est configuré sous la forme d'une soupape de blocage anti-retour, et/ou
- **que** le dispositif de soupape (1) est configuré pour être disposé dans un conduit de recyclage de gaz d'échappement (6) externe d'un moteur à combustion interne, en particulier d'un véhicule automobile.
